**Europäisches Patentamt**

**European Patent Office**

**Office européen des brevets**

(11) Numéro de publication: **0 096 621**

**A2**

# DEMANDE DE BREVET EUROPEEN

(21) Numéro de dépôt: **83401061.3**

(22) Date de dépôt: **26.05.83**

(51) Int. Cl.³: **B 60 K 17/10**
**B 62 D 59/04**

(30) Priorité: **01.06.82 FR 8209494**

(43) Date de publication de la demande:
**21.12.83 Bulletin 83/51**

(84) Etats contractants désignés:
**AT BE CH DE GB IT LI LU NL SE**

(71) Demandeur: **Aumont, Gabriel**
**Rue des Landes, Z.I. Rennes Sud-Est**
**F-35510 Cesson Sevigne(FR)**

(71) Demandeur: **Queguiner, Alain**
**20 avenue des Buttes de Coesmes**
**F-35000 Rennes(FR)**

(72) Inventeur: **Aumont, Gabriel**
**Rue des Landes, Z.I. Rennes Sud-Est**
**F-35510 Cesson Sevigne(FR)**

(72) Inventeur: **Queguiner, Alain**
**20 avenue des Buttes de Coesmes**
**F-35000 Rennes(FR)**

(74) Mandataire: **Corre, Jacques Denis Paul et al,**
**Cabinet Regimbeau 26, Avenue Kléber**
**F-75116 Paris(FR)**

(54) **Dispositif de motorisation d'une remorque attelée à un tracteur équipé d'un organe moteur principal.**

(57) La présente invention concerne un dispositif de motorisation d'un véhicule, du type remorque attelée à un tracteur équipé d'un organe moteur principal. Plus précisément, le dispositif comporte, disposés sur ledit véhicule: un moteur thermique auxiliaire (20), une pluralité de moteurs hydrauliques (50) associés respectivement à chacune des roues motrices de la remorque, un même nombre de pompes (31) reliées respectivement aux moteurs hydrauliques (50) et associées au moteur thermique auxiliaire. Le dispositif comporte également un élément de régulation (100) agissant soit sur les moteurs hydrauliques (50), soit sur les pompes (31), qui est sensible à la vitesse de rotation de l'organe moteur principal du tracteur.

./...

FIG_2

DISPOSITIF DE MOTORISATION D'UNE REMORQUE ATTELEE A UN
TRACTEUR EQUIPE D'UN ORGANE MOTEUR PRINCIPAL.

La présente invention concerne les remorques
et semi-remorques. Plus précisément, la présente invention concerne un dispositif de motorisation et
d'assistance pour les remorques et semi-remorques
utilisées en particulier dans le cadre de transports
routiers.

Depuis déjà de nombreuses années les constructeurs de véhicules ont constaté qu'il était
souhaitable lorsqu'une charge à transporter dépasse
une quinzaine de tonnes de disposer de véhicules
tracteurs auxquels sont attelées des remorques portant la charge, plutôt que de véhicules porteurs et
tracteurs de la charge. De tels ensembles formés
par un tracteur routier et une remorque qui peut
être désolidarisée de celui-ci sont classiquement
dénommés semi-remorques. Cependant, dans la pratique,
les roues des remorques étant essentiellement porteuses, il s'avère que de tels véhicules présentent
un handicap certain lorsque l'adhérence des roues
tractrices est mauvaise, par exemple dans le cas
d'évolution sur sols instables ou glissants.

On a tenté de remédier à cet inconvénient
en donnant aux roues des remorques une fonction
motrice. Pour ce faire, on a proposé de prélever
une partie de la puissance délivrée par le tracteur,
qui doit donc être surdimensionnée en fonction des
caractéristiques de la remorque, pour commander une
pompe hydraulique montée à bord du tracteur et, qui
entraîne elle-même des moteurs hydrauliques dits
moteurs-roues disposés au niveau d'essieux moteurs
de la remorque.

On a ainsi proposé un premier système
dans lequel une pompe multi-débits est montée en
sortie de boîte du tracteur. Cependant, un tel système ne peut donner satisfaction, d'une part, en raison du fait que la vitesse maximum autorisée lorsque le système est enclenché est de l'ordre de 8 km/h, d'autre part en raison du fait que le débit de la pompe est déterminé par sa vitesse de rotation et que celle-ci est strictement dépendante de la vitesse de l'arbre de sortie.

On a également proposé un autre système dans lequel une pompe à débit fixe est montée sur le tracteur et est reliée, par l'intermédiaire d'une tuyauterie, à un moteur hydraulique à cylindrée variable disposé au niveau d'un essieu porteur et moteur de la remorque. La puissance du moteur est limitée et régulée. Là encore, ce système ne donne pas satisfaction, car en-dessous de la limite la perte énergétique est importante, tandis que cette même limite supérieure est vite atteinte.

Enfin, on a proposé, comme cela est décrit en particulier dans le brevet des Etats-Unis d'Amérique n° 3 027 962, de disposer, au niveau de la remorque, un moteur à combustion interne asservi pneumatiquement avec le tracteur et accouplé mécaniquement à l'essieu moteur de la remorque. Ce système est adapté essentiellement à la conduite sur route mais s'avère trop complexe pour être industriellement utilisable et ne peut donner satisfaction, à faible vitesse, lorsque l'adhérence diffère pour chacune des roues de l'essieu moteur de la remorque.

On a également proposé, comme cela est décrit dans la demande de brevet en France n° 2 295 314 de disposer au niveau de la remorque une pluralité de moteurs et de pompes hydrauliques, associés à un moteur auxiliaire à combustion interne, ainsi qu'un élément de régulation contrôlant la pression dans les canalisations qui relient les pompes et les moteurs.

3

Le système de régulation a pour but de contrôler la surcharge du moteur auxiliaire en comparant la vitesse de rotation de celui-ci par rapport à une valeur de consigne affichée sur un organe présent dans la cabine du véhicule tracteur.

Un tel système de régulation permet d'éviter l'arrêt brusque, pour surcharge du moteur auxiliaire. Cependant, ce système ne permet pas d'adapter la puissance d'assistance fournie par le dispositif de motorisation auxiliaire aux conditions requises.

Le besoin se fait donc sentir de disposer de systèmes de motorisation et d'assistance pour remorques et semi-remorques, qui fournissent une puissance d'assistance importante, en autorisant l'interchangeabilité des tracteurs et remorques, et tout en étant de réalisation simple, robuste et économique.

Plus précisément, ledit système devrait permettre une transmission de la puissance aux roues du ou des essieux moteurs de la remorque avec un minimum de poids et d'encombrement, rendre, dans la mesure du possible, les roues indépendantes les unes des autres sur le plan de l'adhérence, et en particulier leur apporter le maximum de puissance, même si l'une ou plusieurs d'entre elles sont dans l'impossibilité d'en transmettre, asservir la vitesse de la remorque, à celle du tracteur, quel que soit le rapport de boîte enclenché au niveau du tracteur, autoriser la marche avant et la marche arrière, éventuellement freiner ou concourir au freinage.

Les demandeurs on tenté de disposer sur la remorque un moteur thermique accouplé à une génératrice reliée elle-même à des moteurs placés au niveau de l'essieu moteur de la remorque. Cependant cette technique implique l'utilisation de génératrices à courant continu et de moteurs de même type pour s'adapter aux conditions de vitesse. Dans la pratique l'encombrement et les masses de ces appareils rendent cette solution tout à fait inexploitable.

Les demandeurs ont également tenté de disposer sur la remorque un moteur thermique associé à une transmission mécanique comprenant une boîte mécanique, une transmission par arbre et un pont moteur porteur pour chaque essieu à différentiel auto-bloquant. Cependant, là encore il s'avère dans la pratique que cette solution n'est pas satisfaisante, car la commande des moteurs, de caractéristiques différentes, est complexe, les masses sont importantes et l'asservissement en vitesse impliquerait l'usage d'une boîte automatique très onéreuse. Enfin, le décrabotage de la puissance de la remorque, au-delà d'une certaine vitesse serait des plus délicat par l'usage d'embrayages ou de crabots, sur chaque roue.

De façon similaire, une transmission pneumatique de la puissance délivrée par un moteur thermique installé sur la remorque ne peut donner satisfaction, car cette solution imposerait un dimensionnement tout à fait inacceptable.

La présente invention vient maintenant proposer un nouveau dispositif de motorisation d'un véhicule, du type remorque attelée à un tracteur équipé d'un organe moteur principal, qui résout de façon satisfaisante la totalité des problèmes précédemment posés, et qui comporte, disposés sur ledit véhicule : au moins un moteur thermique auxiliaire, une pluralité de moteurs hydrauliques, associés respectivement à chacune des roues motrices de la remorque, un même nombre de pompes reliées respectivement aux moteurs hydrauliques et associées au moteur thermique auxiliaire, le dispositif comportant également un élément de régulation, sensible à la vitesse de rotation de l'organe moteur principal du tracteur et qui agit en conséquence soit sur les moteurs hydrauliques, soit sur les pompes, soit encore sur un organe intermédiaire entre ceux-ci, pour contrôler proportionnellement le débit dans les circuits hydrauliques, qui relient les moteurs et les pompes, et contrôler de ce fait, la vitesse des roues motrices de la remorque.

Comme cela apparaîtra plus clairement à la lecture de la description qui va suivre, une telle caractéristique permet d'adapter en permanence la puissance fournie par le dispositif de motorisation auxiliaire, aux conditions requises.

Selon un mode de réalisation préférentiel de la présente invention, le circuit hydraulique prévu entre chacune des pompes et chacun des moteurs hydrauliques est du type circuit ouvert, lesdites pompes débitant dans les moteurs hydrauliques dont le retour s'effectue dans un réservoir au niveau duquel est réalisée l'aspiration des pompes.

Selon une caractéristique de la présente invention, les moteurs hydrauliques possèdent des cylindrées fixes et ils sont associés à des pompes à débit variable.

Selon une autre caractéristique de la présente invention, les moteurs hydrauliques possèdent des cylindrées variables et ils sont associés à des pompes à débit fixe.

Selon une autre caractéristique de la présente invention, les pompes, à cylindrée fixe, débitent dans des moteurs à cylindrée fixe, au travers d'une vanne à régulation proportionnelle de débit.

Selon encore une autre caractéristique avantageuse de la présente invention, l'élément de régulation comporte une génératrice tachymétrique couplée fonctionnellement à l'organe moteur principal du tracteur et apte à délivrer une information proportionnelle à la vitesse de celui-ci.

Selon une caractéristique de la présente invention, un distributeur du type distributeur 4 voies, 3 positions, est intercalé sur le circuit hydraulique reliant chacune des pompes au moteur hydraulique associé.

Selon une autre caractéristique de la présente invention, au moins l'une des pompes est utilisée pour commander un organe annexe et un distributeur du type distributeur 4 voies, 3 positions, dont une voie est obturée, est disposé sur le circuit hydraulique reliant ledit organe annexe à la pompe associée.

A cette fin, l'élément de régulation comprend un conditionneur apte à commander soit la totalité des pompes, soit seulement la pompe associée audit organe annexe.

D'autres caractéristiques et avantages de la présente invention apparaîtront à la lecture de la description détaillée qui va suivre et en regard des dessins annexés, donnés à titre d'exemple non limitatif, qui doivent être considérés comme incorporés à la description par la référence qui leur est faite ici, et sur lesquels :

- la figure 1 représente une vue schématique de dessus d'une remorque tractée équipée d'un dispositif conforme à la présente invention,

- la figure 2 représente une vue schématique, sous forme de blocs fonctionnels du circuit hydraulique et du système de régulation du dispositif de motorisation conforme à la présente invention,

- la figure 3 représente une vue en coupe axiale du capteur de vitesse utilisé dans un dispositif conforme à la présente invention.

Sur les différentes figures les éléments identiques seront désignés par les mêmes références.

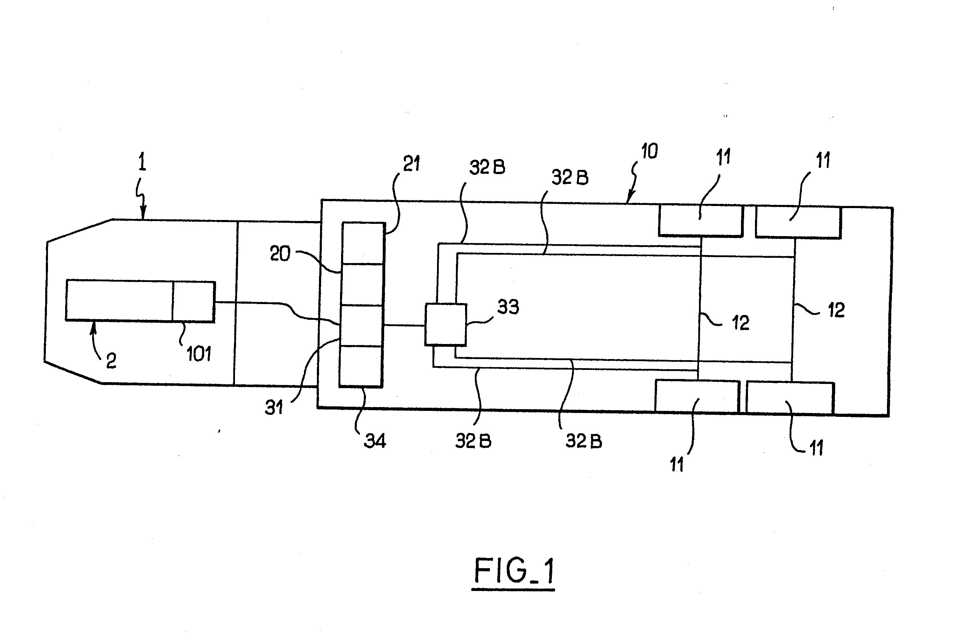

On a représenté schématiquement sur la figure 1 une remorque 10 équipée d'un système de motorisation conforme à la présente invention et tractée par un élément tracteur classique 1 muni d'un moteur référencé 2, dit moteur principal.

Le système de motorisation conforme à la présente invention tel que représenté sur la figure 1 comprend un moteur thermique auxiliaire 20, tel qu'un moteur à combustion interne, associé à son réservoir de carburant 21, et couplé à un groupe de pompes hydrauliques 31, elles-mêmes reliées respectivement à des moteurs hydrauliques, dits "moteurs roue", solidaires fonctionnellement du moyeu des roues 11 des essieux moteurs 12 de la remorque 10.

Selon l'exemple représenté il est prévu deux essieux moteurs 12, il est donc nécessaire de prévoir quatre moteurs roue et quatre pompes 31 associées respectivement à ceux-ci.

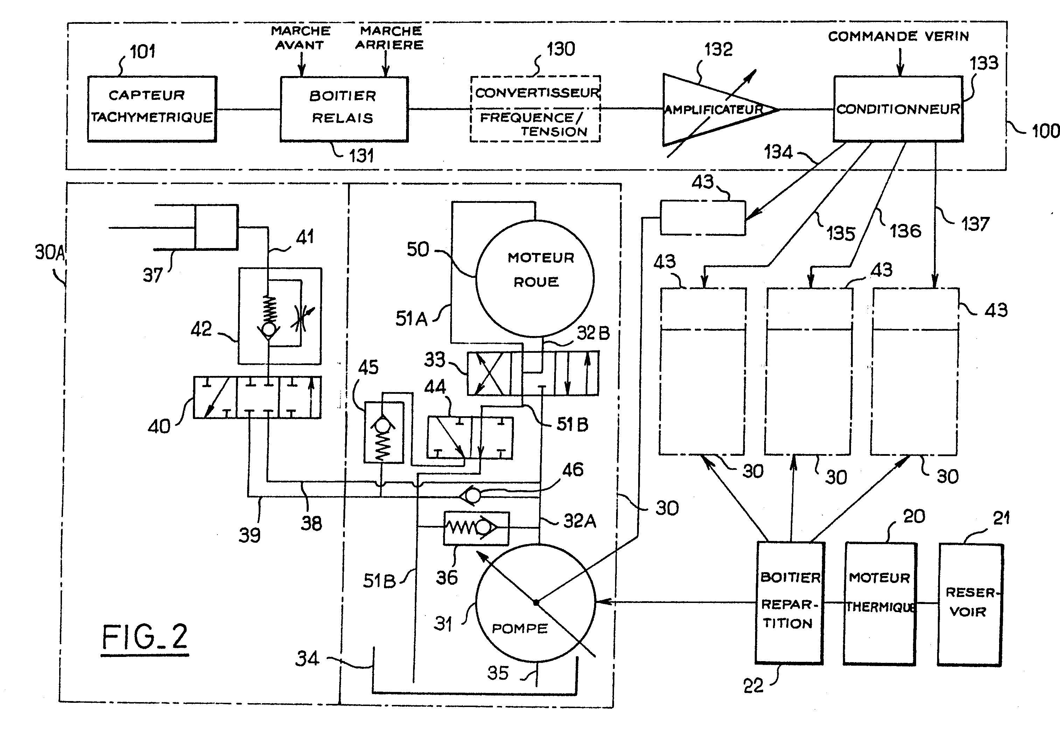

Le couplage entre le moteur thermique 20 et les quatre pompes associées 31 est réalisé par l'intermédiaire d'une boîte de répartition 22 représentée schématiquement sur la figure 2, qui comprend un arbre central, côté moteur thermique 20, et quatre pignons satellites, attaquant chaque pompe 31. De préférence, une liaison par articulation élastique est établie sur le plateau lié au volant moteur afin d'absorber les vibrations du moteur thermique et éviter la transmission de celles-ci vers les pompes. Bien entendu, la lubrification de la boîte de répartition pourra être réalisée à l'aide de tous moyens appropriés.

Pour des raisons technologiques liées au couple et à la vitesse transmissible, ainsi qu'aux possibilités de freinage, on préférera un moteur roue du type moteur hydraulique lent flasqué directement sur le moyeu, aux moteurs roues constitués à partir d'un moteur à pistons axiaux dont le couple est faible sous une vitesse élevée, ce qui imposerait l'utilisation d'un ensemble réducteur.

A titre d'exemple non limitatif, on peut ainsi utiliser un moteur roue type "hydrobase" vendu par la Société Poclain Hydraulique, sous la dénomination "moteur roue H15".

De préférence, comme cela est représenté sur la figure 2, le circuit hydraulique prévu entre chaque pompe 31 et le moteur roue associé 50 est du type circuit ouvert. C'est-à-dire que les pompes 31 débitent dans les moteurs roue 50 par l'intermédiaire d'une canalisation 32A-32B, et ce ,via un distributeur 33 ,dont le rôle et le fonctionnement seront décrits plus en détail par la suite ; tandis que les moteurs roue 50 par l'intermédiaire d'une canalisation 51A reliée au distributeur 33, et qui communique avec une canalisation 51B émergeant de ce dernier, retournent le fluide dans un réservoir commun 34 (schématiquement représenté) dans lequel est réalisée l'aspiration de chaque pompe 31 par l'intermédiaire de la canalisation 35.

Par rapport au circuit fermé, réalisant une transmission hydrostatique, dans lequel chaque pompe débite dans un moteur roue dont le retour s'effectue directement sur l'alimentation de la pompe, la solution du circuit ouvert présente différents avantages et offre en particulier la possibilité, comme cela apparaîtra à la lecture de la suite de la description, de réaliser une marche arrière à l'aide d'un distributeur, d'utiliser le circuit hydraulique pour une fonction annexe et de pouvoir commander de façon simple les pompes. D'autre part le circuit ouvert n'exige pas de pompe annexe dite de gavage comme c'est le cas dans un circuit fermé, pour compenser les fuites et éviter les entrées d'air et de cavitation.

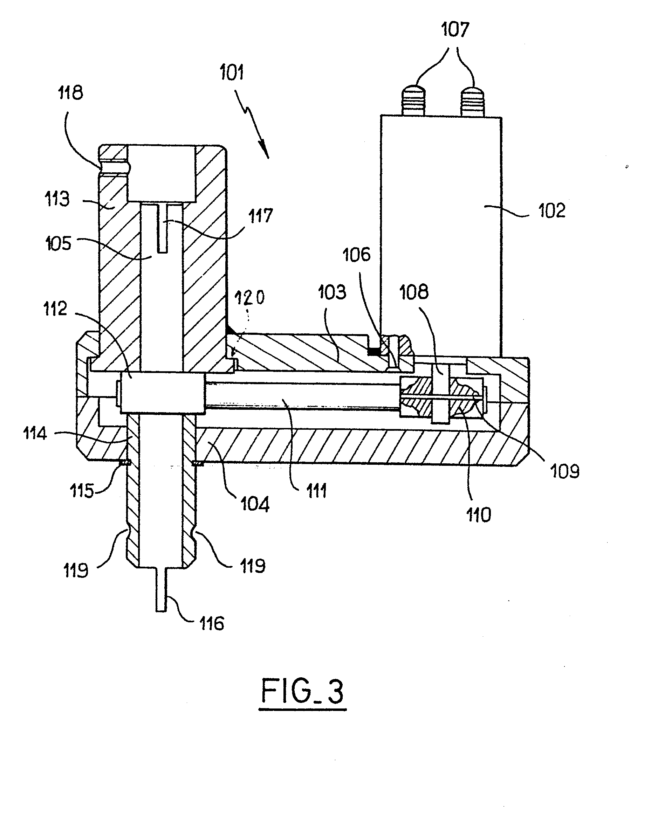

Selon un premier mode de réalisation conforme à la présente invention (mais non représenté sur les figures), les pompes (31) peuvent être à cylindrée fixe, débitant dans un distributeur à effet proportionnel, c'est-à-dire dont le débit est proportionnel à une information électrique générée par le système de régulation 100 représenté sur la figure 3.

Pour ce faire, on peut par exemple utiliser un régulateur de débit type F5C vendu par la Société ABEX DENISON sous la dénomination valves de compensation R5A ou R5P.

Cependant, dans la pratique, les demandeurs ont constaté que cette solution provoque un laminage non négligeable de l'huile qui entraîne d'une part une forte élévation de température, d'autre part, une dégradation rapide des qualités de l'huile.

Pour ces raisons, on préfère utiliser des pompes 31 à débit variable à réglage fin de la vitesse.

Bien entendu, les caractéristiques des pompes seront aisément déterminées par l'homme de l'art en fonction des caractéristiques des moteurs roue retenus, et notamment de la cylindrée de ceux-ci, et de la vitesse linéaire maximale que l'on souhaite atteindre.

A titre d'exemple non limitatif, on peut retenir comme compatible avec le moteur roue H 15 précité de la Société Poclain Hydraulique, une pompe à barillet réglable type A7V module 40 vendue par la Société REXROTH. Les calculs montrent que compte tenu des caractéristiques des fournisseurs cette pompe permet une vitesse linéaire maximale de l'ordre de 20 km/h.

Le débit de ces pompes, qui sont commandées électriquement, est proprotionnel à la tension, et passe donc d'un débit nul à un débit maximum, lorsque par exemple la tension appliquée passe de 0 à 24 Volts.

Les demandeurs ont procédé à des essais avec un moteur thermique 20, FIAT type 8041 i,6 cylindres d'une puissance de 83 kw à 2600 tr/mn. Les essais ont donné pleinement satisfaction.

On va maintenant décrire plus en détail le circuit hydraulique 30 reliant chaque pompe 31 au moteur roue associé, tel que ce circuit est représenté sur la figure 2.

Comme cela apparaît sur cette figure, le distributeur 33 intercalé au niveau des canalisations 32A-32B et 51A-51B reliant chaque moteur roue 50 d'une part à la pompe 31 associée, d'autre part au réservoir 34, est du type distributeur 4 voies, 3 positions. Un tel distributeur joue le rôle de commande de marche avant / marche arrière et de débrayage.

Le débrayage est obtenu en faisant chuter la pression (position représentée sur la figure 2) par retour d'huile dans le réservoir 34, de façon à provoquer le retour des pistons dans la position centrale sous la sollicitation des ressorts incorporés aux moteurs.

La marche avant est obtenue en mettant en communication les canalisations 32A et 32B d'une part et 51A et 51B d'autre part.

La marche arrière est obtenue en croisant les liaisons des canalisations, c'est-à-dire en mettant en communication les canalisations 32A et 51A d'une part, et 32B et 51B d'autre part.

Comme cela est également représenté sur la figure 2 une fonction sécurité est réalisée par un clapet 36 reliant, dans le sens approprié les canalisations 32A et 51B précitées et tarée convenablement, par exemple à une pression de l'ordre de 350 bars. Un tel clapet 36 limite par conséquent la pression dans le circuit hydraulique.

Comme cela est représenté schématiquement sur la figure 2, il est ainsi prévu quatre circuits hydrauliques 30 séparés et similaires reliant chacune des pompes 31 au moteur roue 50 associé. Bien entendu le nombre de ces circuits hydrauliques sera adapté en fonction du nombre de moteurs roue utilisé et donc du nombre de pompes.

L'indépendance totale de chacune des voies ainsi réalisée permet de conserver l'autonomie de puissance de chacune des roues motrices 11 de la remorque. Par conséquent, si une seule des roues motrices 11 de la remorque est sur terrain ferme ou dur, c'est-à-dire que les trois autres roues patinent totalement, la puissance d'assistance délivrée par le moteur thermique sera transmise intégralement à cette roue en question, ce qui permettra de dégager l'attelage.

De façon avantageuse, tel que cela est également représenté sur la figure 2, on utilise également l'une des pompes 31 d'un circuit hydraulique 30 pour commander, par l'intermédiaire d'un circuit hydraulique auxiliaire 30A, un organe annexe 37, du type vérin (schématiquement représenté sur la figure 2) susceptible d'effectuer par exemple la levée des bennes. Pour ce faire, le distributeur 33 est placé en position de débrayage.

Le circuit hydraulique auxiliaire 30A se compose de deux canalisations 38 et 39 reliées respectivement à la canalisation 32A précitée, en sortie de pompe, et à la canalisation 51$^B$ précitée de retour au réservoir 34.

Les deux canalisations 38 et 39 aboutissent à un distributeur 40 quatre voies, 3 positions, dont une voie est obstruée.

La sortie du distributeur 40 est reliée à l'aide d'une canalisation 41, et par l'intermédiaire d'un clapet anti-retour étrangleur 42 à l'organe annexe 37 précité.

Dans une première position du distributeur 40,(tel que représenté sur la figure 2), l'organe annexe 37 est déconnecté du circuit hydraulique 30 de la pompe 31.

Dans une seconde position du distributeur 40, l'organe annexe 37 est relié à la canalisation 32A de sortie de pompe 31 pour assurer la commande de cet organe annexe.

Enfin, dans une troisième position du distributeur 40, l'organe annexe 37 est relié à la canalisation 51B de retour au réservoir 34 pour assurer la décharge du fluide.

Les distributeurs 33 et 40 sont pilotés par la pression elle-même. De préférence, les pompes 31 seront décalées par rapport à leur position de débit nul, de façon à saturer le circuit lorsque les distributeurs sont fermés. Cette solution permet de s'affranchir de l'utilisation d'un accumulateur hydraulique qui serait indispensable si, en absence d'utilisation, les pompes 31 étaient à débit nul. D'autre part, il convient de remarquer que seules les fuites des distributeurs seront à compenser par le réglage en position de la pompe, de telle sorte que ladite pression serve au pilotage. Quoi qu'il en soit, en cas de pression excessive, le clapet 36 intervient.

Pour éviter les problèmes de vibrations, toutes les canalisations (32A-32B, 35, 38, 39, 41, 51A-51B) seront réalisées en tuyau souple.

Le contenu du réservoir 34 doit être déterminé en fonction des caractéristiques des autres éléments, et notamment du débit, pour éviter un échauffement trop important de l'huile du circuit hydraulique. Avec les éléments préférentiels dont les références ont été précédemment indiquées, la capacité adéquate du réservoir 34 est estimée à 280 litres.

On va maintenant décrire plus en détail le mode de réalisation du circuit de régulation 100 représenté sur la figure 2 qui assure un réglage du débit dans le circuit hydraulique auxiliaire proportionnel à la vitesse du tracteur.

Ce circuit de régulation 100 a pour but de fournir une information sous forme d'un signal électrique, représentative de la vitesse du tracteur 1 pour piloter en conséquence et proportionnellement le débit dans le circuit hydraulique reliant chaque pompe à chaque moteur et plus précisément le débit des pompes 31, dans le mode de réalisation représenté sur la figure 2.

On comprend que le circuit de régulation 100 doit permettre l'interchangeabilité entre les tracteurs 1 et les remorques 10 associées.

Le circuit de régulation 100 comprend un capteur tachymétrique 101, sensible à la vitesse du tracteur 1 (qui sera décrit plus en détail dans la suite de la présente description, en regard de la figure 3) et un circuit aval de conditionnement et de mise en forme du signal.

Ledit capteur tachymétrique 101 peut être formé soit d'une dynamo tachymétrique 102 qui donne en sortie une tension analogique fonction du nombre de tours de roue du tracteur 1, donc de sa vitesse de déplacement, soit d'un alternateur tachymétrique qui délivre, en sortie, une fréquence proportionnelle à la vitesse du tracteur.

Dans ce dernier cas, il est alors nécessaire d'intercaler, dans le circuit de conditionnement, un convertisseur fréquence / tension 130 (représenté en traits interrompus sur la figure 2).

Comme cela apparaît sur la figure 2, le capteur tachymétrique 101 est relié à l'entrée d'un boîtier relais 131 adapté pour laisser passer le signal électrique provenant du capteur 101 lorsque un levier (non représenté) de marche avant ou de marche arrière, disposé par exemple sur le tableau de bord du tracteur, est sollicité. Dans la pratique, le boîtier relais 131 pourra être composé de deux relais commandés, l'un par un signal de marche avant, l'autre par un signal de marche arrière.

La sortie du boîtier relais 131 est reliée à l'entrée d'un amplificateur à gain variable 132 dont la sortie attaque un conditionneur 133. Les sorties du conditionneur 133 sont reliées par l'intermédiaire des liaisons 134, 135, 136 et 137 aux cartes amplificatrices respectives 43 (schématiquement représentées) associées à chacune des pompes 31 précitées, et qui commandent le débit de celles-ci.

En d'autres termes, les cartes amplificatrices 43 constituent des modules électroniques de commande électrique des pompes 31.

L'amplificateur à gain variable 132 a pour but de rendre compatible la tension de sortie délivrée par la dynamo tachymétrique 101 (ou l'alternateur et le convertisseur fréquence / tension 130) avec la tension requise par les cartes amplificatrices 43.

Ainsi donc, si par exemple la tension de commande des cartes amplificatrices 43 doit être comprise entre 0 et 9 Volts, il est nécessaire que la tension en sortie de l'amplificateur 132 soit égale à 9 Volts pour une vitesse , en assistance, maximale, par exemple de l'ordre de 20 km/h. Les caractéristiques d'amplification ou d'atténuation de l'amplificateur 132 seront donc aisément déterminées en conséquence.

Le conditionneur 133 est adapté de telle sorte que dans une première position, il retransmette la tension présente sur son entrée au niveau de ses quatre sorties, et de là, par l'intermédiaire des liaisons 134 à 137, sur les cartes amplificatrices 43 précitées.

Tandis que dans une autre position du conditionneur obtenue lorsque un signal approprié de commande d'organe annexe 37, ou vérin, tel qu'un signal de bennage, est appliqué sur l'entrée appropriée du conditionneur, celui-ci ne délivre une tension en sortie que sur la liaison 134 couplée à la carte amplificatrice 43 associée à une pompe 31 reliée à la fois à un circuit hydraulique 30 et à un circuit hydraulique 30A de commande d'organe annexe 37.

Le conditionneur est de plus adapté pour délivrer alors à la carte amplificatrice 43 correspondante un signal de consigne dont l'amplitude est déterminée en fonction du calage désiré pour la pompe de façon à obtenir le débit souhaité.

Dans la plupart des cas, les masses électriques des cartes amplificatrices 43 (disposées sur la remorque) et la masse du dispositif de régulation n'étant pas communes, on prévoira une alimentation séparée pour l'amplificateur à gain variable 132.

De préférence, afin de ne pas détériorer les moteurs-roue 50, il est prévu, au niveau du dispositif de régulation du signal, une diode Zener sensible à la tension délivrée par celui-ci qui coupe l'alimentation des pompes 31 lorsque la vitesse du tracteur 1 dépasse une valeur donnée, par exemple 20 km/h.

De plus, de façon avantageuse, un potentiomètre du dispositif de régulation de signal, monté sur le tableau de bord, et agissant par exemple sur l'amplificateur à gain variable 132, permet de décaler d'environ 5 % l'information représentative de la vitesse du tracteur, fournie par le capteur tachymétrique 101, dans le sens d'une augmentation du débit des pompes 31, de telle sorte que dans un tel cas, la remorque ait tendance à pousser le tracteur.

On va maintenant décrire plus en détail le mode de réalisation du capteur tachymétrique 101 représenté sur la figure 3.

Ce capteur tachymétrique 101 se compose d'un carter supérieur 103 et d'un carter inférieur 104, qui loge un axe de tachymètre 105 et qui supporte une génératrice tachymétrique 102.

Cette dernière est assemblée sur le carter supérieur à l'aide de tous moyens appropriés tels qu'une vis 106. On distingue sur la figure 3, les plots 107 de sortie de la génératrice tachymétrique 102.

L'axe 108 de la génératrice tachymétrique 102 est couplé par l'intermédiaire d'une goupille 109 à un pignon denté 110.

Ce dernier coopère, par l'intermédiaire d'une courroie crantée 111 avec un pignon denté 112 solidaire de l'axe 105 de tachymètre. Comme cela apparaît sur la figure 3, les deux pignons dentés 110 et 112 et la courroie crantée 111 sont logés dans une chambre définie par les deux carters supérieur 103 et inférieur 104.

De part et d'autre du pignon denté 112, l'axe 105 de tachymètre porte d'une part une douille 113, d'autre part un fourreau 114, ce dernier étant muni, sur l'extérieur du carter inférieur 104, d'un anneau ouvert ou circlips 115 engagé dans une rainure annulaire prévue sur sa périphérie.

L'axe 105 est ainsi engagé coaxialement dans la douille 113 et le fourreau 114. La douille 113 repose au niveau d'une portée d'appui 120 prévue à l'une de ses extrémités contre le carter supérieur 103.

De plus, l'axe 105 de tachymètre devant être interposé entre des pièces standards initialement assemblées entre elles, et entraînées en rotation par l'organe moteur principal du tracteur, chacune des extrémités de l'axe 105 sera de préférence munie d'une structure appropriée, telle qu'une languette axiale 116 et une fente axiale 117 aptes à coopérer avec les pièces standards précitées ; tandis que la douille 113 et le fourreau 114 sont, de façon similaire, munis de structures appropriées, telles qu'un alésage fileté radial 118 et des méplats ou trous borgnes radiaux 119.

Bien entendu, la forme particulière de l'axe 105 de tachymètre, du fourreau 114 et de la douille 118 sera adaptée en fonction de chaque norme. Ainsi, en variante, l'extrémité libre de la douille 113 peut être filetée extérieurement tandis que l'extrémité libre du fourreau 114 est équipée d'un écrou.

L'axe 105 de tachymètre doit être ainsi interposé entre deux pièces standards initialement assemblées et choisies telles que l'information délivrée par le capteur tachymétrique 101 soit totalement indépendante du rapport de vitesse enclenché sur le tracteur. A cette fin, le capteur tachymétrique peut, par exemple être monté à la sortie de la boîte de vitesse associée à l'organe moteur principal, au niveau de la prise du câble de tachymètre.

Bien entendu, le capteur tachymétrique 101, peut être monté en tout autre point approprié, tel que sur la prise de compteur de vitesse ou sur l'arbre de transmission.

De préférence, l'un des carters du capteur 101 est muni de pieds de centrage (non représentés sur la figure 3). Ce capteur 101 sera aisément immobilisé à l'aide de tous moyens appropriés, tels que des vis traversant des alésages correspondants prévus dans les carters.

Le rapport existant entre les deux pignons dentés 110 et 112 disposés respectivement sur l'axe 108 de la génératrice tachymétrique 102 et sur l'axe 105 de tachymètre sera déterminé de façon telle que la tension (ou la fréquence dans le cas d'un alternateur tachymétrique) fournie par la génératrice tachymétrique 102 soit compatible avec les niveaux d'entrée requis pour les éléments du système de régulation disposés en aval.

D'autre part, il convient de noter que certains constructeurs, dans des conditions de travail données, imposent un contrôle de la pression au niveau de la canalisation de retour des moteurs hydrauliques ou moteurs-roue 50, et ceci afin notamment de prolonger la durée de vie de ceux-ci.

Pour ce faire, on peut par exemple intercaler au niveau de la canalisation 51B de retour au réservoir, un distributeur 44, 4 voies, 2 positions dont une voie a été obstruée, ou 3 voies, 2 positions.

Dans une première position, la canalisation 51B communique directement avec le réservoir 34.

Dans une seconde position, un clapet anti-retour 45, convenablement taré, par exemple à 10 bars, est intercalé au niveau de cette canalisation 51B.

De plus, afin d'éviter les effets de cavitation au niveau des moteurs hydrauliques 50, il est avantageux qu'un clapet anti-retour 46 soit relié entre la canalisation 32A et la canalisation 51B, en parallèle du clapet 36, mais ceci en autorisant l'aspiration de la canalisation 51B vers la canalisation 32A.

Bien entendu, la présente invention n'est pas limitée aux modes de réalisation qui viennent d'être décrits à partir desquels on pourra envisager de nombreuses variantes de réalisation conformes à l'esprit de l'invention.

Ainsi, on pourra envisager d'utiliser des pompes 31 de débit fixe, et de moduler à l'aide des signaux générés par le système de régulation 100, la cylindrée de moteurs-roue à cylindrée variable.

Enfin, l'organe annexe 37 pourra être utilisé pour de nombreuses applications telles que le bennage, le déplacement de grues ou de treuils.

D'autre part, l'invention n'est pas limitée aux remorques utilisées dans le cadre du transport routier mais s'étend également à tous véhicules tractés employés, par exemple sur chantier, et d'une façon générale sur des sols posant des problèmes d'adhérence, voire d'enlisement.

REVENDICATIONS

1. Dispositif de motorisation d'un véhicule, du type remorque attelée à un tracteur équipé d'un organe moteur principal, caractérisé par le fait qu'il comporte, disposés sur ledit véhicule :

- au moins un moteur thermique auxiliaire (20)
- une pluralité de moteurs hydrauliques (50) associés respectivement à chacune des roues motrices (11) de la remorque (10),
- un même nombre de pompes (31) reliées respectivement aux moteurs hydrauliques (50) et associées au moteur thermique auxiliaire (20), et par le fait, qu'il comporte également
- un élément de régulation (100), sensible à la vitesse de rotation de l'organe moteur principal (2) du tracteur et qui contrôle en conséquence et proportionnellement le débit dans les circuits hydrauliques reliant les moteurs hydrauliques (50) et les pompes (31), et contrôle de ce fait, la vitesse des roues motrices de la remorque, en agissant sur les moteurs hydrauliques (50), les pompes (31) ou un organe intermédiaire entre ceux-ci.

2. Dispositif selon la revendication 1, caractérisé par le fait que le circuit hydraulique (30) prévu entre chacune des pompes (31) et chacun des moteurs hydrauliques (50) est du type circuit ouvert, lesdites pompes (31) débitant dans les moteurs hydrauliques (50) dont le retour s'effectue dans un réservoir (34) au niveau duquel est réalisée l'aspiration des pompes (31).

3. Dispositif selon l'une des revendications 1 et 2, caractérisé par le fait que les moteurs hydrauliques (50) possèdent des cylindrées fixes et qu'ils sont associés à des pompes à débit variable (31).

4. Dispositif selon l'une des revendications 1 et 2, caractérisé par le fait que les moteurs hydrauliques (50) possèdent des cylindrées variables et qu'ils sont associés à des pompes (31) à débit fixe.

5. Dispositif selon l'une des revendications 1 et 2, caractérisé par le fait que les pompes (31), à cylindrée fixe, débitent dans des moteurs (50) à cylindrée fixe, au travers d'une vanne à régulation proportionnelle de débit.

6. Dispositif selon l'une des revendications 1 à 5, caractérisé par le fait que l'élément de régulation (100) comporte une génératrice tachymétrique (101), couplée fonctionnellement à l'organe moteur principal (2) du tracteur et apte à délivrer une information proportionnelle à la vitesse de celui-ci.

7. Dispositif selon l'une des revendications 1 à 6, caractérisé par le fait qu'un distributeur (33) du type distributeur 4 voies, 3 positions, est intercalé sur le circuit hydraulique (30) reliant chacune des pompes (31) au moteur hydraulique (50) associé.

8. Dispositif selon l'une des revendications 1 à 7, caractérisé par le fait que au moins l'une des pompes (31) est utilisée pour commander un organe annexe (37).

9. Dispositif selon la revendication 8, caractérisé par le fait qu'un distributeur (40) du type distributeur 4 voies, 3 positions, dont une voie est obturée, est disposé sur le circuit hydraulique (30A) reliant ledit organe annexe (37) à la pompe (31) associée.

10. Dispositif selon l'une des revendications 8 et 9, caractérisé par le fait que l'élément de régulation (100) comprend un conditionneur (133) apte à commander soit la totalité des pompes (31), soit seulement la pompe (31) associée audit organe annexe (37).

FIG_1

FIG.2

2/3

0096621

## FIG_3